# FASCICULE DE BREVET EUROPEEN

(11) **EP 0 633 988 B1**
(45) Date de publication et mention de la délivrance du brevet: **25.10.1995**
(21) Numéro de dépôt: 93905395.5
(22) Date de dépôt: 16.02.1993
(51) Int. Cl.: F16D 65/84, F16D 65/16

(54) **DISPOSITIF DE PROTECTION THERMIQUE**
WÄRMESCHUTZVORRICHTUNG
THERMAL PROTECTION DEVICE

(30) Priorité: 09.04.1992 FR 9204335
(43) Date de publication de la demande: 18.01.1995
(73) Titulaire: ALLIEDSIGNAL EUROPE SERVICES TECHNIQUES, 93700 Drancy (FR)
(72) Inventeur: MORONI, Jonny, F-93190 Livry-Gargan (FR)
(74) Mandataire: Bentz, Jean-Paul
(86) Numéro de dépôt international: FR9300153
(87) Numéro de publication internationale: WO9321457

(56) Documents cités:
- EP-A- 0 362 546
- FR-A- 2 516 189

## Description

La présente invention concerne un dispositif de protection thermique notamment utilisable pour protéger un capuchon de frein à disque ou à tambour et composé d'un support et d'un écran thermique, ce dernier comprenant une plaque percée d'un orifice pour présenter un bord externe et un bord interne, constituée d'un matériau élastiquement déformable non sujet au flambage, et maintenue en place sur le support par l'intermédiaire d'au moins une première surface d'appui sur laquelle elle exerce par son bord interne un effort résultant de sa déformation élastique, ce dispositif comprenant des moyens d'appui supplémentaires fournissant à la plaque une seconde surface d'appui et permettant à cette plaque d'exercer sur les première et seconde surfaces d'appui des efforts respectifs orientés dans des directions opposées, le bord interne de la plaque étant découpé de manière à présenter une pluralité de pattes, et le support comprenant une première partie cylindrique qui fournit à sa périphérie une première surface d'appui essentiellement réduite à un cercle, la seconde surface d'appui comprenant une partie au moins d'une face axiale d'une seconde partie cylindrique du support, contigue de la première et disposée vers l'extérieur de cette première partie cylindrique suivant une direction radiale de cette dernière.

Un dispositif de ce type est par exemple décrit dans le document EP-A-0 362 546, dans lequel le support est constitué par un des pistons qui actionnent les plaquettes d'un frein à disque, ce brevet antérieur illustrant l'intérêt de dispositifs de protection thermique dans ce type d'application.

Ce dispositif de l'art antérieur, conçu essentiellement pour les véhicules automobiles, souffre d'une certaine faiblesse sur le plan du maintien mécanique de l'écran thermique, qui rend son utilisation plus délicate dans des conditions extrêmes pour ce qui est des chocs, déformations et vibrations subis, telles par exemple que celles rencontrées dans les systèmes de freinage pour poids lourds.

Dans ce contexte, l'invention a pour but de proposer un dispositif de protection thermique perfectionné qui, bien que peu coûteux et permettant un montage facile et rapide, conduise à un maintien mécanique particulièrement résistant de l'écran thermique sur le support, sur le piston de frein par exemple.

A cette fin, le dispositif de l'invention est essentiellement caractérisé en ce que la face axiale de la seconde partie cylindrique du support est, sauf à l'endroit de la seconde surface d'appui, creusée de manière à faire apparaître une cavité, en ce que la plaque, au voisinage de son bord interne, est déformée hors de son plan suivant deux plis de concavités opposées pour former un bourrelet annulaire, en ce que ledit bourrelet est engagé dans la cavité sans en toucher le fond, et en ce que la seconde surface d'appui comprend une partie au moins de la périphérie de la face axiale de ladite seconde partie cylindrique.

D'autres caractéristiques et avantages de l'invention ressortiront clairement de la description qui en est faite ci-après, à titre indicatif et nullement limitatif, en référence au dessin annexé sur lequel :
- **La Figure 1** est une vue en coupe d'un dispositif conforme à l'invention ;
- **La Figure 2** est une vue de face d'un écran thermique utilisable pour l'invention ; et
- **La Figure 3** est une vue de profil du même écran thermique.

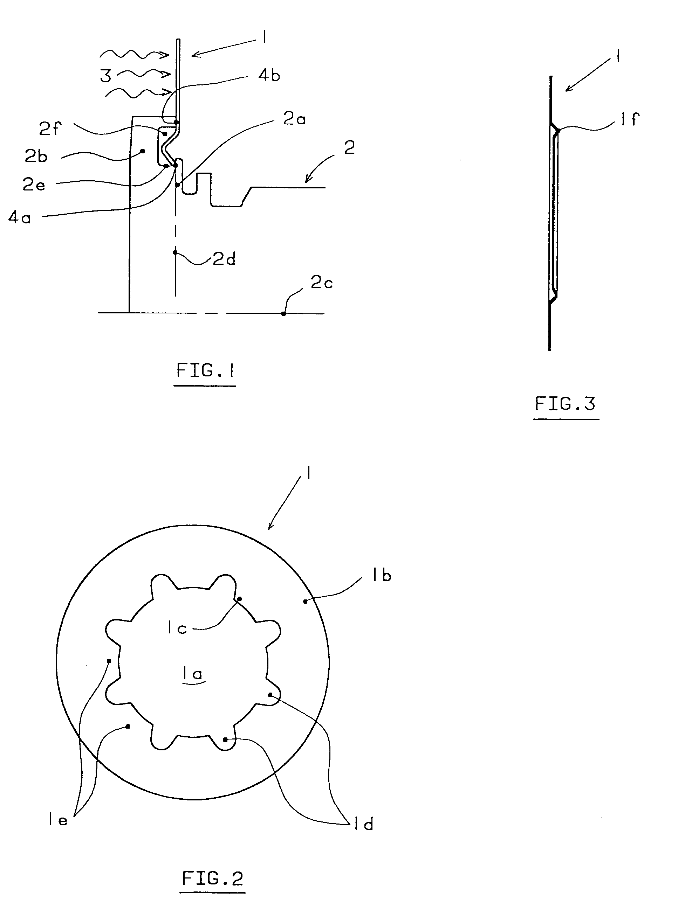

Le dispositif de protection thermique de l'invention comprend essentiellement un écran thermique 1 capable de s'adapter sur un support 2, tel qu'un piston de frein à disque, pour protéger du rayonnement 3, émis par une source de chaleur intense, tous les éléments fragiles (non représentés) situés derrière cet écran (à droite de l'écran 1 sur les Figures 1 et 4).

L'écran thermique comprend une plaque essentiellement plane percée d'un orifice central la (Figure 2) de manière à présenter un bord externe 1b et un bord interne 1c.

Cette plaque est constituée d'un matériau élastiquement déformable et non sujet au flambage, et par exemple réalisée dans une feuille d'acier.

L'écran thermique 1 ainsi constitué est maintenu en place sur le support 2 par l'intermédiaire d'au moins une première surface d'appui 4a sur laquelle l'écran exerce, par son bord interne, un effort résultant de sa déformation élastique.

Pour assurer au mieux cette déformation élastique de l'écran thermique au voisinage de son bord interne, il est avantageux comme le montre la Figure 2 de pratiquer des découpes, telles que 1d, dans ce dernier de manière à faire apparaître une pluralité de pattes telles que 1e.

La première surface d'appui est fournie par la périphérie d'une partie cylindrique 2a du support 2, les bords 1b et 1c de l'écran sont essentiellement circulaires et concentriques, et la première surface d'appui est elle-même essentiellement réduite à un cercle.

Le dispositif comporte des moyens d'appui supplémentaires (2b sur la Figure 1) qui fournissent à l'écran 1 une seconde surface d'appui 4b et permettent à la plaque qui constitue cet écran d'exercer sur les première et seconde surfaces d'appui des efforts respectifs orientés dans des directions opposées.

Selon l'invention (Figure 1), la seconde surface d'appui 4b comprend une partie au moins d'une face axiale d'une seconde partie cylindrique 2b du support 2, contiguë de la première partie cylindrique 2a, de même axe 2c, mais de diamètre supérieur.

Pour limiter le transfert d'énergie thermique du support 2 vers l'écran 1, il est possible de réduire à un ensemble de points de contact la surface d'appui 4b, celle-ci fournissant à l'écran 1 une pluralité de points d'appui situés dans le plan 2d qui sépare virtuellement les parties cylindriques 2a et 2b, ou au voisinage de ce plan, mais à une distance de l'axe 2c supérieure à celle qui sépare cet axe de la première surface d'appui 4a.

De préférence, les première et seconde parties cylindriques 2a, 2b se raccordent en formant une gorge 2e dont le bord commun à ces parties constitue la première surface d'appui 4a.

Par ailleurs, le face axiale de la seconde partie cylindrique 2b du support 2 qui fait face à l'écran 1 est avantageusement creusée, sauf sur la partie de sa périphérie qui forme la seconde surface d'appui 4b, de manière à faire apparaître une cavité annulaire 2f destinée à recevoir un bourrelet annulaire 1f de l'écran, ce bourrelet résultant d'une déformation de l'écran hors de son plan, au voisinage de son bord interne 1c, suivant deux plis circulaires, concentriques et de concavités opposées et s'insérant dans la cavité sans en toucher le fond au repos.

La mise en place de l'écran 1 sur le support 2 est obtenue en enfilant cet écran sur la partie de moindre diamètre du support 2 (à droite sur la figure 1), puis en exerçant une pression sur l'intérieur du bourrelet 1f (de la droite vers la gauche), les pattes flexibles 1e s'engageant alors dans la gorge 2e.

Dans cette position, l'écran 1 est sollicité dans un sens qui tend a priori à lui faire adopter une forme conique pointant vers la gauche de la Figure 1.

Dans la mesure cependant où il est réalisé dans un matériau élastique non sujet au flambage, l'écran 1 résiste à cette sollicitation en exerçant sur la première surface d'appui 4a un effort dirigé de la gauche vers la droite et, sur la seconde surface d'appui 4b, un effort dirigé en sens inverse, la conjugaison de ces efforts conduisant à garantir le maintien de l'écran 1 sur le support 2, même dans des conditions très défavorables.

## Revendications

1. Dispositif de protection thermique notamment utilisable pour protéger un capuchon de frein à disque ou à tambour et composé d'un support (2) et d'un écran thermique (1), ce dernier comprenant une plaque percée d'un orifice (1a) pour présenter un bord externe (1b) et un bord interne (1c), constituée d'un matériau élastiquement déformable non sujet au flambage et maintenue en place sur le support par l'intermédiaire d'au moins une première surface d'appui (4a) sur laquelle elle exerce par son bord interne un effort résultant de sa déformation élastique, ce dispositif comprenant des moyens d'appui supplémentaires (2b) fournissant à la plaque une seconde surface d'appui (4b) et permettant à cette plaque d'exercer sur les première et seconde surfaces d'appui des efforts respectifs orientés dans des directions opposées, le bord interne de la plaque étant découpé de manière à présenter une pluralité de pattes (1e), et le support comprenant une première partie cylindrique (2a) qui fournit à sa périphérie une première surface d'appui essentiellement reduite à un cercle, la seconde surface (4b) d'appui comprenant une partie au moins d'une face axiale d'une seconde partie cylindrique (2b) du support, contiguë de la première et disposée vers l'extérieur de cette première partie cylindrique (2a), suivant une direction radiale de cette dernière, caractérisé en ce que la face axiale de la seconde partie cylindrique du support est, sauf à l'endroit de la seconde surface d'appui, creusée de manière à faire apparaître une cavité (2f), en ce que la plaque, au voisinage de son bord interne, est déformée hors de son plan suivant deux plis de concavités opposées pour former un bourrelet annulaire (1f), en ce que ledit bourrelet est engagé dans la cavité sans en toucher le fond, et en ce que la seconde surface (4b) d'appui comprend une partie au moins de la périphérie de la face axiale de ladite seconde partie cylindrique.

## Claims

1. Thermal protection device which can be used especially for protecting a disk- or drum-brake cap and composed of a support (2) and a thermal screen (1), the latter comprising a plate pierced through by an orifice (1a) in order to present an outer edge (1b) and an inner edge (1c), which plate consists of an elastically deformable material not subject to buckling and is held in place on the support by means of at least one first bearing surface (4a) on which it exerts, by its inner edge, a force resulting from its elastic deformation, said device comprising additional bearing means (2b) supplying the plate with a second bearing surface (4b) and enabling this plate to exert on the first and second bearing surfaces forces respectively oriented in opposite directions, the inner edge of the plate being cut out so as to present a plurality of tabs (1e), and the support comprising a cylindrical portion (2a) which supplies its periphery with a first bearing surface essentially reduced to a circle, the second bearing surface (4b) comprising at least one portion of an axial face of a second cylindrical portion (2b) of the support, contiguous with the first and arranged towards the outside of this first cylindrical portion (2a) along a radial direction of the latter, characterized in that the axial face of the second cylindrical portion of the support is, except in the location of the second bearing surface, hollowed out so as to produce a cavity (2f), in that the plate, in the vicinity of its inner edge, is deformed out of its plane along two folds of opposite concavities in order to form an annular flange (1f), in that said flange is engaged in the cavity without touching the bottom of it and in that the second bearing surface (4b) comprises at least one portion of the periphery of the axial face of said second cylindrical portion.

## Patentansprüche

1. Wärmeschutzvorrichtung, insbesondere zur Verwendung zum Schutz einer Kappe für eine Scheiben- oder Trommelbremse, die aus einem Träger (2) und einem Wärmeschirm (1) besteht, wobei dieser eine Platte aufweist, die von einer Öffnung (1a) durchsetzt ist und damit einen Außenrand (1b) und einen Innenrand (1c) bildet, und die aus einem elastisch verformbaren Material besteht, das keinem Knicken unterworfen ist, und über wenigstens eine erste Anlagefläche (4a) an Platz an dem Träger gehalten wird, auf die sie durch ihren Innenrand eine sich aus ihrer elastischen Verformung ergebende Kraft ausübt, wobei diese Vorrichtung zusätzliche Anlagemittel (2b) aufweist, die der Platte eine zweite Anlagefläche (4b) bereitstellen und es dieser Platte ermöglichen, auf die erste und die zweite Anlagefläche Kräfte auszuüben, die in entgegengesetzte Richtungen orientiert sind, wobei der Innenrand der Platte derart ausgeschnitten ist, daß er mehrere Klammern (1e) aufweist, und wobei der Träger einen ersten zylindrischen Teil (2a) aufweist, der an seinem Umfang eine erste, im wesentlichen zu einem Kreis reduzierte Anlagefläche bereitstellt, wobei die zweite Anlagefläche (4b) wenigstens einen Teil einer axialen Seite eines zweiten zylindrischen Teils (2b) des Trägers aufweist, der an den ersten angrenzt und nach außerhalb des ersten zylindrischen Teils (2a) entlang einer radialen Richtung angeordnet ist, dadurch gekennzeichnet, daß die axiale Seite des zweiten zylindrischen Teils des Trägers abgesehen vom Ort der zweiten Anlagefläche derart ausgehöhlt ist, daS ein Hohlraum (2f) erscheint, daß die Platte in der Nähe ihres Innenrandes aus ihrer Ebene nach zwei Falzen mit entgegengesetzter Konkavität verformt ist, um einen ringförmigen Wulst (1f) zu bilden, daß der Wulst in dem Hohlraum in Eingriff steht, ohne seinen Boden zu berühren, und daß die zweite Anlagefläche (4b) wenigstens einen Teil des Umfangs der axialen Seite des zweiten zylindrischen Teils umfaßt.
